# FASCICULE DE BREVET EUROPEEN

(11) **EP 0 931 028 B1**
(45) Date de publication et mention de la délivrance du brevet: **26.03.2003**
(21) Numéro de dépôt: 98941477.6
(22) Date de dépôt: 29.07.1998
(51) Int. Cl.: C03C 10/00

(54) **PLAQUE VITROCERAMIQUE ET SON PROCEDE DE FABRICATION**
GLASKERAMISCHE SCHEIBE UND VERFAHREN ZUR HERSTELLUNG
GLASS-CERAMIC PLATE AND METHOD FOR MAKING SAME

(30) Priorité: 01.08.1997 FR 9709912
(43) Date de publication de la demande: 28.07.1999
(73) Titulaire: Eurokera S.N.C., 02405 Chateau-Thierry Cedex (FR)
(72) Inventeur: VILATO, Pablo, F-75014 Paris (FR); BOURRAT Catherine, 02650 Crezancy (FR); Grandpierre Gilles, 02400 ESSOMES SUR MARNE (FR); Peschiera Sophie, 77430 Champagne sur Seine (FR)
(74) Mandataire: Le Cam, Stéphane Georges Elie
(86) Numéro de dépôt international: FR9801676
(87) Numéro de publication internationale: WO99006334

(56) Documents cités:
- EP-A- 0 437 228
- US-A- 4 057 434
- US-A- 4 192 665
- US-A- 4 461 839
- US-A- 5 492 869

## Description

La présente invention concerne une plaque vitrocéramique, notamment destinée à couvrir des éléments chauffants.

Plus particulièrement, l'invention a trait à une plaque vitrocéramique utilisée en tant que plaque de cuisson. Une telle plaque de cuisson comporte notamment des éléments chauffants sous-jacents tels que des foyers halogène ou radiant.

Pour pouvoir être utilisée comme plaque de cuisson avec des éléments chauffants sous-jacents, une plaque vitrocéramique doit répondre à un certain nombre de critères :
- d'une part, elle doit présenter une transmission dans les longueurs d'onde du domaine du visible à la fois suffisamment basse pour masquer au moins une partie de(s) élément(s) chauffant(s) sous-jacent(s) et pour éviter l'éblouissement de l'utilisateur par ce(s) même(s) élément(s) chauffant(s) sous-jacent(s) en état de marche et suffisamment élevée pour que, dans un but de sécurité l'utifisateur puisse détecter visuellement l'(es) élément(s) chauffant(s) en état de marche ;
- d'autre part, afin d'optimiser l'efficacité de chauffage et de cuisson, elle doit avoir une transmission élevée dans les longueurs d'onde du domaine de l'infrarouge.

Actuellement, il existe sur le marché de la vitrocéramique deux types de plaques différenciables par leur apparence, à savoir : une plaque d'aspect brun transparent, une plaque d'aspect blanc opaque.

Le premier type précité trouve une application lorsque les éléments sous-jacents associés sont des éléments chauffants tels que des foyers halogène ou radiant. Le deuxième type précité est, quant à lui, associé exclusivement à un moyen de chauffage par induction.

La demande actuelle du marché s'oriente vers de nouveaux aspects des plaques vitrocéramiques, particulièrement vers des aspects en harmonie avec le mobilier de cuisine.

L'invention se donne pour tâche de répondre à la demande actuelle du marché et de proposer un nouveau type de plaque vitrocéramique dont l'aspect et les caractéristiques optiques restent compatibles avec une utilisation d'éléments chauffants sous-jacents tels que des éléments radiant ou halogène.

Pour ce faire, l'invention a pour objet une plaque vitrocéramique à base d'oxyde de silicium, d'aluminium, de lithium, notamment destinée à couvrir des éléments chauffants. Selon l'invention, ladite plaque présente un flou d'au moins 50 %. On rappelle que le flou mesure le niveau de diffusion lumineuse et qu'il est défini, dans le cadre de l'invention, comme étant le rapport de la transmission diffuse sur la transmission totale à une longueur d'onde égale à 550 nm.

De préférence, le flou est supérieur à 70 % avantageusement supérieur à 90 %.

Selon une caractéristique avantageuse, la plaque selon l'invention présente une transmission lumineuse T_{L} comprise entre 5 et 40 %. notamment entre 5 et 10 %, de préférence entre 6 et 9 %.

La plaque vitrocéramique ainsi proposée par l'invention répond au problème technique posé.

Selon une autre caractéristique, la plaque selon l'invention comporte comme phase cristalline. de préférence unique, une solution solide de cristaux de β-spodumène dont la taille des cristallites individuelles est avantageusement inférieure à 100 nm.

Avantageusement, la plaque selon l'invention présente un coefficient de dilatation linéaire inférieur à 15.10⁻⁷/°C, notamment égal à 9.10⁻⁷/°C dans le domaine de température compris entre 20°C et 700°C.

La plaque définie ci-dessus est également remarquable en ce qu'elle a pour composition essentiellement en pourcentages pondéraux les oxydes suivants :

| | |
|---|---|
| SiO₂ | 63 - 70 |
| Al₂O₃ | 18 - 22 |
| Li₂O | 2,5 - 4,5 |

L'invention vise également un procédé de fabrication d'une plaque vitrocéramique à base d'oxyde de silicium, d'aluminium, de lithium, notamment destinée à couvrir des éléments chauffants, dans lequel on effectue au moins un cycle de céramisation d'une plaque de verre, ledit cycle de céramisation comportant un palier de cristallisation d'une durée t à une température T aboutissant à la phase cristalline β-quartz.

Selon le procédé de l'invention, on effectue un cycle de traitement thermique de durée t' et/ou à une température T' augmentée (s) par rapport respectivement à la durée t et/ou à la température T d'au moins 5 %.

Selon une première varianté de l'invention, la différence T' - T est d'au moins 40°C, de préférence égale à 100°C.

Selon une deuxième variante de l'invention, la différence t' - t est d'au moins 15 minutes.

L'invention concerne enfin une composition de verre utilisée pour la mise en oeuvre du procédé précité, composition remarquable en ce qu'elle comprend en pourcentages pondéraux les oxydes suivants :

| | |
|---|---|
| SiO₂ | 63 - 70 |
| Al₂O₃ | 18 - 22 |
| Li₂O | 2.5 - 4 5 |

Dans le cadre de l'invention, lorsqu'on utilise une telle composition de verre, la plaque obtenue a un aspect sensiblement « laiteux ».

Il va de soi qu'il peut être ajouté toutes sortes d'oxydes colorants à la composition de verre sans pour autant modifier l'effet souhaité, à savoir un aspect diffusant.

En effet, les auteurs de la présente invention ont trouvé, d'une manière inattendue, que cet aspect diffusant de la plaque vitrocéramique était dû à la présence comme phase cristalline unique de cristaux β-spoduméne.

Jusqu'à aujourd'hui, dans l'esprit de l'homme du métier, une telle phase conférait nécessairement un aspect opaque à une plaque vitrocéramique.

La plaque vitrocéramique proposée par l'invention peut être utilisée dans un dispositif de cuisson et/ou de maintien à haute température autre que celui visé particulièrement par l'invention, cet autre dispositif comportant d'autres moyens de chauffage que les éléments chauffants radiant ou halogène, par exemple des moyens de chauffage par induction et/ou à gaz.

Bien entendu, la plaque vitrocéramique selon l'invention peut également être utilisée dans un dispositif de cuisson mixte, c'est-à-dire qui comprend au moins deux sources de chaleur différentes par transfert direct et indirect de celle-ci, par exemple au moins un élément chauffant tel qu'un radiant, un halogène et au moins un brûleur à gaz atmosphérique et/ou au moins un moyen de chauffage par induction.

Dans cette variante, la plaque comporte alors au moins une zone destinée à couvrir l'élément chauffant et au moins une ouverture destinée à recevoir le brûleur à gaz atmosphérique et/ou au moins une zone destinée à couvrir le moyen de chauffage par induction.

Il peut être prévu que cette ouverture soit façonnée et qu'elle soit au sommet d'une déformation locale de la plaque tel que décrit dans la demande de brevet FR 97 061114 déposée le 20 mai 1997.

D'autres détails et caractéristiques avantageuses ressortiront ci-après de la description des exemples de réalisation d'une plaque vitrocéramique selon l'invention, non limitatifs.

On précise tout d'abord que les plaques vitrocéramiques conformes à l'invention et relatives aux exemples 1 à 5 ont toutes la même composition.

Celle-ci comprend en pourcentages pondéraux les oxydes suivants :

| | |
|---|---|
| SiO₂ | 69,05 |
| Al₂O₃ | 18,90 |
| Li₂O | 3,3 |
| MgO | 0,9 |
| ZnO | 1,55 |
| BaO | 0,75 |
| K₂O | 0,1 |
| TiO₂ | 2,6 |
| ZrO₂ | 1,75 |
| As₂O₃ | 0,9 |
| Na₂O | O,2 |

Les verres ayant la composition mentionnée plus haut sont fondus aux alentours de 1650°C, en une quantité telle qu'un ruban de verre puisse être laminé, ruban dans lequel des plaques de verre de dimensions finales 56,5 cm x 56,5 cm x 0,4 cm sont découpées.

Ces plaques de verre sont, de manière connue en soi, habituellement céramisées sur des grilles céramiques selon un cycle de céramisation. Ce cycle de céramisation comprend de manière connue, les étapes suivantes :
a) élévation de la température à 50-80 degrés/minutes jusqu'au domaine de nucléation, généralement situé au voisinage du domaine de transformation du verre ;
b) traversée de l'intervalle de nucléation (670-800°C) en une vingtaine de minutes ;
c) élévation de la température en 15 à 30 minutes jusqu'à la température T du palier de céramisation comprise entre 900 et 960°C ;
d) maintien de la température T du palier de céramisation pendant un temps t de 10 à 25 minutes ;
e) refroidissement rapide jusqu'à la température ambiante.

On rappelle que dans le cadre de l'invention un cycle de céramisation d'une plaque de verre à base de SiO₂-Al₂O₃-Li₂O est un cycle de traitement thermique comportant un palier au bout duquel la plaque de verre à base de SiO₂-Al₂O₃-Li₂O comporte la phase cristalline β-quartz.

Pour réaliser les plaques vitrocéramiques conformes à l'invention et relatives aux exemples 1 à 5, on procède de la manière suivante

### EXEMPLE 1

On effectue un cycle de traitement thermique en réalisant :
- une fois, de manière strictement identique, les étapes a) b) c) d) e) du cycle de céramisation décrit ci-dessus ;
- une fois, de manière strictement identique, les étapes a) b) d) e) du cycle de céramisation décrit ci-dessus ;
- préalablement aux étapes d) et e), une étape c') dans laquelle on élève en 15 à 30 minutes la température jusqu'à une température T' de l'ordre de 1050°C.

### EXEMPLES 2. 3 ET 4

On effectue pour chacun de ces exemples un cycle de traitement thermique en réalisant :
- une fois, de manière strictement identique, les étapes a) b) et e) du cycle de céramisation décrit ci-dessus ;
   et, préalablement à l'étape e) :
- une étape c') dans laquelle on élève en 15 à 30 minutes la température jusqu'à la température T' respectivement de l'ordre de 1050, 1060, 1070°C ;
- une étape d') dans laquelle on maintient la température T' pendant un temps t' augmenté d'au moins 15 minutes par rapport au temps t.

### EXEMPLE 5

On effectue un cycle de traitement thermique en réalisant neuf fois, de manière strictement identique, les étapes a) b) c) d) et e) du cycle de céramisation décrit ci-dessus.

### EXEMPLES 6 ET 7

Les exemples comparatifs 6 et 7 sont relatifs à des plaques vitrocéramiques selon l'état de l'art produites en conditions industrielles, commercialisées respectivement par la Société EUROKERA et par la Société NIPPON ELECTRIC GLASS (NEG) et d'aspect respectivement brun transparent et blanc opaque

Les plaques vitrocéramiques relatives aux exemples 1 à 5 ont toutes un aspect blanc « laiteux ».

Sur chacune des plaques vitrocéramiques relatives aux exemples 3 à 5 on a réalisé différentes mesures et essais de caractérisation cristallographique, thermique et mécanique :
1/ on a réalisé tout d'abord une analyse par diffraction des rayons X. On a trouvé que toutes les plaques comportaient comme phase cristalline unique une solution solide de cristaux β-spodumène.
   On a mesuré à l'aide de cette technique la taille des cristallites individuelles de ces cristaux, taille présentée dans le tableau 1 ci-dessous ;
2/ on a réalisé des essais de choc thermique en faisant subir aux plaques une différence de température de l'ordre de 700°C. Aucune casse n'est apparue. La dilatation thermique a été mesurée à l'aide d'un dilatomètre différentiel entre la température ambiante et 700°C ;
3/ on a mesuré la déformation au cours des tests de laboratoire. La plaque, une fois le cycle de traitement thermique effectué, est découpée à des dimensions 35 cm x 50 cm et placée sur un support de type marbre de mécanique. La déformation est la valeur maximale de l'écart de côtes entre deux points de la diagonale, écart mesuré à l'aide d'un moyen mécanique du type palpeur. Nous considérons qu'une déformation inférieure à 0,6 mm mesurée dans les conditions de laboratoire est acceptable pour la fabrication de plaques en conditions industrielles.

On a enfin mesuré le module de rupture (M.D.R.). Les plaques ont d'abord été polies puis abrasées avec un abrasif de granulométrie contrôlé. On les a ensuite placées sur un support à trois billes et soumises à une contrainte axiale jusqu'à obtenir la fracturation.

Les résultats des mesures et essais pratiqués sont regroupés dans le tableau 1 ci-dessous.

**TABLEAU 1**

| | Taille des cristallites (nm) | Coefficient de dilatation thermique (X 10⁻⁷/°C) | M.D.R (MPa) | Déformation (mm) |
|---|---|---|---|---|
| Exemple 1 | 70 | 9,6 | 110 | 0,1 |
| Exemple 2 | 80 | 9,5 | 109 | 0,13 |
| Exemple 3 | 80 | 9,5 | 106 | 0,15 |
| Exemple 4 | 80 | 9,5 | 106 | 0,19 |
| Exemple 5 | 80 | 9,2 | 137 | 0,2 |

On a enfin mesuré les valeurs spectrophotométriques des plaques vitrocéramiques relatives aux exemples 1 à 5 selon l'invention ainsi que. celles relatives aux exemples comparatifs 6 et 7.

On précise que les mesures des plaques relatives aux exemples 1 à 5 ont été effectuées à faces lisses et parallèles entre elles.

On précise également que les mesures de la transmission lumineuse T_{L} dans le domaine des longueurs d'onde du visible (intégrée entre 0, 38 µm et 0,78 µm) et du flou H (dont on rappelle qu'il est égal ici au rapport entre la transmission diffusion et la transmission totale à une longueur d'onde égale à 550 nm) ont été faites selon l'illuminant D₆₅.

On précise enfin que les mesures de la transmission infrarouge T_{IR} (intégrée entre 0,78 µm et 2,15 µm) ont été effectuées selon la norme ISO 9050.

Les valeurs, intégrées à 4 mm d'épaisseur, sont indiquées, en pourcentage dans le tableau 2 ci-dessous.

**TABLEAU 2**

| | T_{L} | H | T_{IR} |
|---|---|---|---|
| Exemple 1 | 6,43 | 100 | 44,84 |
| Exemple 2 | 8,67 | 100 | 44,39 |
| Exemple 3 | 8,01 | 100 | 42,20 |
| Exemple 4 | 6,04 | 100 | 37,50 |
| Exemple 5 | 30,92 | 76 | 79,85 |
| Exemple 6 | 1,45 | 48 | 56,66 |
| Exemple 7 | 0,31 | * | 14,93 |

| | | | |
|---|---|---|---|
| * La valeur du flou n'a pu être déterminée. Cela est dû au fait qu'il apparaît un phénomène de réfraction et non de diffusion lumineuse. | | | |

Du tableau 2 ci-dessus, il ressort clairement que visuellement les plaques selon l'invention se distinguent très largement des plaques selon l'art antérieur avec une augmentation sensible de la transmission lumineuse T_{L} et du flou H, et qu'elles présentent une transmission dans l'infrarouge tout à fait compatible avec l'utilisation d'éléments chauffants sous-jacents

Cette compatibilité a d'ailleurs été corroborée par des essais de temps d'ébullition. Ces essais consistent à remplir une casserole avec un litre d'eau à une température de 15 ± 2°C, puis à placer cette casserole sur la plaque vitrocéramique sous laquelle un élément chauffant radiant ou halogène est en état de marche et enfin à relever le temps pour que l'eau atteigne une température de 98°C à partir de 20°C. Le temps relevé pour toutes les plaques vitrocéramiques relatives aux exemples 1 à 5 est sensiblement identique à celui relevé pour les exemples comparatifs 6 et 7.

Il va de soi que de nombreuses modifications peuvent être apportées à la plaque vitrocéramique et au procédé de fabrication décrits ci-dessus, sans sortir pour autant du cadre de l'invention. Ainsi, cumulativement ou alternativement, il est possible d'augmenter le niveau de diffusion lumineuse obtenu dans la plaque vitrocéramique conformément au procédé décrit ci-dessus par un autre moyen, par exemple par une modification de la texturation de surface d'au moins un des deux faces de la plaque.

## Revendications

1. Plaque vitrocéramique, notamment destinée à couvrir des éléments chauffants, cette plaque étant à base d'oxyde de silicium, d'aluminium et de lithium dans les pourcentages pondéraux suivants
| | |
|---|---|
| SiO₂ | 63 - 70 |
| Al₂O₃ | 18 - 22 |
| Li₂O | 2,5 - 4,5 |
et comportant comme phase cristalline une solution solide de cristaux de β-spodumène, cette plaque présentant un flou d'au moins 50 %, de préférence supérieur à 70 %, avantageusement supérieur à 90 %, ce flou étant le rapport de la transmission diffuse sur la transmission totale à une longueur d'onde égale à 550 nm, et cette plaque présentant une transmission lumineuse T_{L} comprise entre 5 et 40 %.

2. Plaque selon la revendication 1, **caractérisée en ce qu**'elle présente une transmission lumineuse T_{L} comprise entre 5 et 10 %, de préférence entre 6 et 9 %.

3. Plaque selon la revendication 1 ou 2, **caractérisée en ce qu**'elle comporte comme phase cristalline unique une solution solide de cristaux de β-spodumène.

4. Plaque selon l'une des revendications 1 à 3, **caractérisée en ce que** la taille des cristallites individuelles des cristaux de β-spodumène est inférieure à 100 nm.

5. Plaque selon l'une quelconque des revendications précédentes, **caractérisée en ce qu**'elle présente un coefficient de dilatation thermique inférieur à 15.10⁻⁷/°C, notamment égal à 9.10⁻⁷/°C dans le domaine de température de 20°C à 700°C.

6. Procédé de fabrication d'une plaque vitrocéramique à base d'oxyde de silicium, d'aluminium, de lithium, notamment destinée à couvrir des éléments chauffants et telle que définie dans l'une des revendications 1 à 5, dans lequel on effectue au moins un cycle de céramisation d'une plaque de verre, ledit cycle de céramisation comportant un palier de céramisation d'une durée t à une température T aboutissant à la phase cristalline β-quartz, **caractérisé en ce qu**'on effectue un cycle de traitement thermique de durée t' et/ou à la température T' augmentée(s) par rapport respectivement à la durée t et/ou la température T d'au moins 5 %.

7. Procédé selon la revendication 6, **caractérisé en ce que** la différence T'-T est d'au moins 40°C, de préférence égale à 100°C.

8. Procédé selon la revendication 6 ou 7, **caractérisé en ce que** la différence t'-t est d'au moins 15 minutes.

9. Dispositif de cuisson et/ou de maintien à haute température comportant une plaque vitrocéramique selon l'une des revendications 1 à 5, un ou plusieurs éléments chauffants tels qu'un élément radiant ou halogène et/ou un ou plusieurs brûleurs à gaz atmosphérique et/ou un ou plusieurs moyens de chauffage par induction.

## Patentansprüche

1. Vitrokeramikplatte, die insbesondere vorgesehen ist, Heizelemente zu bedecken, auf der Basis von Siliciumoxid, Aluminiumoxid und Lithiumoxid mit den Gewichtsprozenten
SiO₂ 63 bis 70
Al₂O₃ 18 bis 22
Li₂O 2,5 bis 4,5
ist, als kristalline Phase eine feste Lösung von β-Spodumenkristallen enthält, eine Trübung von mindestens 50 %, vorzugsweise über 70 %, und vorteilhafterweise über 90 % aufweist, wobei diese Trübung das Verhältnis von diffusem zu Gesamtlichttransmissionsgrad bei einer Wellenlänge von 550 nm ist, und einen Lichttransmissionsgrad T_{L}, von 5 bis 40 % besitzt.

2. Platte nach Anspruch 1, **dadurch gekennzeichnet, dass** sie einen Lichttransmissionsgrad T_{L} von 5 bis 10 % und vorzugsweise zwischen 6 und 9 % aufweist.

3. Platte nach Anspruch 1 oder 2, **dadurch gekennzeichnet, dass** sie als einzige kristalline Phase eine feste Lösung von β-Spodumenkristallen enthält.

4. Platte nach einem der Ansprüche 1 bis 3, **dadurch gekennzeichnet, dass** die Größe der einzelnen Kristallite der β-Spodumenkristalle weniger als 100 nm beträgt.

5. Platte nach einem der vorhergehenden Ansprüche, **dadurch gekennzeichnet, dass** sie im Temperaturbereich von 20 bis 700 °C einen Wärmeausdehnungskoeffizienten von unter 15·10⁻⁷/°C und insbesondere von 9·10⁻⁷/°C besitzt.

6. Verfahren zur Herstellung einer Vitrokeramikplatte auf der Basis von Siliciumoxid, Aluminiumoxid und Lithiumoxid, die insbesondere vorgesehen ist, Heizelemente zu bedecken und wie in einem der Ansprüche 1 bis 5 definiert ist, in welchem mindestens ein Zyklus zur Keramisierung einer Glasplatte durchgeführt wird, der eine Keramisierungsstufe mit einer Dauer t bei einer Temperatur T umfasst, die zur kristallinen β-Quarz-Phase führt, **dadurch gekennzeichnet, dass** ein Wärmebehandlungszyklus mit einer Dauer t' und/oder einer Temperatur T' durchgeführt wird, die in Bezug auf die Dauer t und/oder die Temperatur T um mindestens 5 % erhöht ist/sind.

7. Verfahren nach Anspruch 6, **dadurch gekennzeichnet, dass** die Differenz T' - T mindestens 40 °C und vorzugsweise 100 °C beträgt.

8. Verfahren nach Anspruch 6 oder 7, **dadurch gekennzeichnet, dass** die Differenz t' - t mindestens 15 Minuten beträgt.

9. Vorrichtung zum Glühen und/oder Halten auf hoher Temperatur, die eine Vitrokeramikplatte nach einem der Ansprüche 1 bis 5, ein oder mehrere Heizelemente wie ein Wärmestrahlungs- bzw. Halogenstrahlungselement und/oder einen oder mehrere Gasbrenner und/oder ein oder mehrere mit Induktion arbeitende Heizmittel umfasst.

## Claims

1. Glass-ceramic plate, particularly intended to cover heating elements, said plate being based on silicon, aluminium and lithium oxide in the following percentages by weight:
| | |
|---|---|
| SiO2 | 63-70 |
| Al₂O₃ | 18-22 |
| Li₂O | 2.5-4.5 |
and having as a crystalline phase a solid solution of β-spodumene crystals, said plate having a haze ratio of at least 50%, preferably exceeding 70% and advantageously exceeding 90%, said haze ratio being the ratio of the diffuse transmission to the total transmission at a wavelength of 550 nm, said plate having a light transmission TL between 5 and 40%.

2. Plate according to claim 1, **characterized in that** it has a light transmission TL between 5 and 10%, preferably between 6 and 9%.

3. Plate according to claim 1 or 2, **characterized in that** it has as a single crystalline phase a solid solution of β-spodumene crystals.

4. Plate according to one of the claims 1 to 3, **characterized in that** the size of the individual crystallites of the β-spodumene crystals is below 100 nm.

5. Plate according to any one of the preceding claims, **characterized in that** it has a thermal expansion coefficient below 15.10⁻⁷/°C, particularly of 9.10⁻⁷/°C in the temperature range 20 to 700°C.

6. Process for the production of a glass-ceramic plate based on silicon, aluminium and lithium oxide, particularly intended to cover heating elements and as defined in one of the claims 1 to 5, wherein at least one ceramization cycle is performed on a glass plate, said ceramization cycle involving a ceramization plateau of duration t at a temperature T leading to the crystalline β-quartz phase, **characterized in that** a heat treatment cycle of duration t' and/or at a temperature T' increased compared respectively with the duration t and/or the temperature T by at least 5% is performed.

7. Process according to claim 6, **characterized in that** the difference T'-T is at least 40°C and is preferably 100°C.

8. Process according to claim 6 or 7, **characterized in that** the difference t'-t is at least 15 minutes.

9. Device for cooking and/or maintaining at high temperature having a glass-ceramic plate according to one of the claims 1 to 5, one or more heating elements such as a radiant or halogen element and/or one or more atmospheric gas burners and/or one or more induction heating means.
